# FASCICULE DE BREVET EUROPEEN

(11) **EP 0 843 332 B1**
(45) Date de publication et mention de la délivrance du brevet: **05.01.2005**
(21) Numéro de dépôt: 97410126.3
(22) Date de dépôt: 06.11.1997
(51) Int. Cl.: H01H 71/02

(54) **Disjoncteur avec un bloc disjoncteur et des modules de traitement, de calibrage et de communication**
Lastschalter mit einem Leistungsschalterblock mit Bearbeitungs-Modul, Kalibrierungs-Modul und Anzeige-Modul
Circuit breaker having a breaker block and modules for processing, calibration and indication

(30) Priorité: 15.11.1996 FR 9614171
(43) Date de publication de la demande: 20.05.1998
(73) Titulaire: Schneider Electric Industries SAS, 92500 Rueil-Malmaison (FR)
(72) Inventeur: Suptitz, Eric, 38050 Grenoble cedex 09 (FR); Bellotto, Henri, 38050 Grenoble cedex 09 (FR); Weynachter, Luc, 38050 Grenoble cedex 09 (FR); Allin, Patrice, 38050 Grenoble cedex 09 (FR)
(74) Mandataire: Jouvray, Marie-Andrée

(56) Documents cités:
- EP-A- 0 641 055
- DE-U- 9 105 489
- FR-A- 2 583 569
- FR-A- 2 703 506

## Description

L'invention concerne un disjoncteur comportant un bloc disjoncteur, un module amovible de traitement, comportant une unité de traitement électronique et connecté mécaniquement et électriquement au bloc disjoncteur, un module amovible de calibrage, comportant des moyens de calibrage, fixé mécaniquement au bloc disjoncteur et connecté électriquement à l'unité de traitement, et des moyens de communication connectés à un bus de communication externe.

Il est connu d'utiliser un disjoncteur avec différents types de déclencheurs électroniques. Ceux-ci sont donc généralement amovibles et ne sont montés dans le disjoncteur que lors de l'installation de celui-ci.

L'invention a pour but d'améliorer l'interchangeabilité des déclencheurs de manière à satisfaire la variété de la demande, allant de la protection de base à la centrale de mesure.

Selon l'invention, ce but est atteint par le fait que le disjoncteur comporte au moins un module amovible de communication, distinct des modules de traitement et de calibrage, comportant lesdits moyens de communication, fixé mécaniquement au bloc disjoncteur et connecté à l'unité de traitement par des moyens de liaison à isolement galvanique, de préférence optique, à des organes du bloc disjoncteur représentatifs de l'état du disjoncteur par des moyens de liaison mécanique et au bus de communication externe par des moyens de liaison électrique d'entrée/sortie.

Le module de communication peut comporter des moyens de signalisation connectés par les moyens de liaison mécanique au bloc disjoncteur, et des moyens de télémesure et/ou de téléréglage connectés par les moyens de liaison optique à l'unité de traitement, les moyens de signalisation, de télémesure et/ou de téléréglage étant connectés au bus de communication externe par les moyens de liaison électrique d'entrée / sortie.

Il est aussi possible que le module de communication comporte des moyens de commande connectés électriquement à des auxiliaires de commande du disjoncteur, les moyens de commande étant connectés au bus de communication externe par les moyens de liaison électrique d'entrée/sortie.

Selon un perfectionnement de l'invention, les moyens de liaison électrique d'entrée/sortie comportent dans le module de communication des moyens adaptés à un bus de communication de type prédéterminé.

Selon un autre perfectionnement, les moyens de liaison mécanique du module de communication aux organes du bloc disjoncteur représentatifs de l'état du disjoncteur comportent des microcontacts, disposés dans le module de communication et ayant des organes de commande en saillie sur une face du module de communication opposée au bloc disjoncteur, et dans le bloc disjoncteur des moyens mécaniques d'actionnement desdits organes de commande, le module de communication comportant des moyens de transformation des signaux mécaniques des microcontacts en signaux électriques et des moyens de signalisation de l'état du disjoncteur. Les organes de commande des microcontacts comportent, de préférence, chacun une membrane, étanche, souple, recouvrant le micro-contact correspondant.

La disposition des fonctions de communication dans un module de communication distinct des modules de traitement et de calibrage permet d'adapter le disjoncteur à différents protocoles de communication sans multiplier la variété des modules de traitement. De plus, l'indépendance du module de communication et sa connexion directe, par une liaison mécanique, à des organes du bloc disjoncteur représentatifs de l'état du disjoncteur permettent au module de communication d'assurer certaines fonctions notamment de signalisation, de façon autonome dès qu'il est connecté physiquement au bloc disjoncteur, même en l'absence de module de traitement.

Selon un perfectionnement de l'invention, le bloc disjoncteur comportant des moyens de mesure de courant constitués par des tores de Rogowski dont la sortie est connectée au module de traitement, le module de calibrage, monté de manière amovible sur le bloc disjoncteur, comporte une face avant avec des indications représentatives du calibre du disjoncteur.

Par ailleurs, le module de traitement comportant des moyens de protection instantanée analogique ultime connectés à des capteurs de courant du bloc disjoncteur et destinés à comparer à un seuil instantané analogique maximal une valeur représentative du courant fournie par les capteurs de courant, le disjoncteur peut comporter un module additionnel comportant des moyens de réglage dudit seuil en fonction du type du disjoncteur, ledit module additionnel étant fixé mécaniquement sur le bloc disjoncteur, de manière non amovible, connecté électriquement au module de traitement et comportant une face comportant des indications représentatives du pouvoir de coupure du disjoncteur.

Selon une variante, le disjoncteur comporte des moyens de montage du module de calibrage et du module additionnel, lesdits moyens de montage comportant une interface solidaire du bloc disjoncteur et comportant des moyens de guidage et des moyens de fixation complémentaires de moyens de guidage et de moyens de fixation du module de calibrage et du module additionnel.

D'autres avantages et caractéristiques ressortiront plus clairement de la description suivante des différents modes de réalisation, donnés à titre d'exemples non limitatifs et représentés par les dessins annexés dans lesquels :
La figure 1 illustre, de manière schématique, la disposition des différents modules composant un disjoncteur selon l'invention.
La figure 2 représente les liaisons électriques et optiques entre les différents modules du disjoncteur selon la figure 1.
La figure 3 illustre, sous forme éclatée, le positionnement des différents modules dans un mode de réalisation particulier.
La figure 4 représente, sous forme de schéma bloc, un mode particulier de réalisation du module de communication du disjoncteur selon les figures 1 à 3.
Les figures 5 et 6 représentent une variante d'un détail de réalisation de la liaison mécanique entre le bloc disjoncteur et le module de communication, respectivement en position d'ouverture et de fermeture du disjoncteur.
Les figures 7 et 8 illustrent, respectivement en perspective et en vue de dessus éclatée, un mode de réalisation particulier d'une interface, d'un module de calibrage et d'un module additionnel d'un disjoncteur selon l'invention.
La figure 9 représente, sous forme de schéma bloc, les interactions entre le module de traitement, le module de calibrage et le module additionnel d'un mode particulier de réalisation d'un disjoncteur selon l'invention.

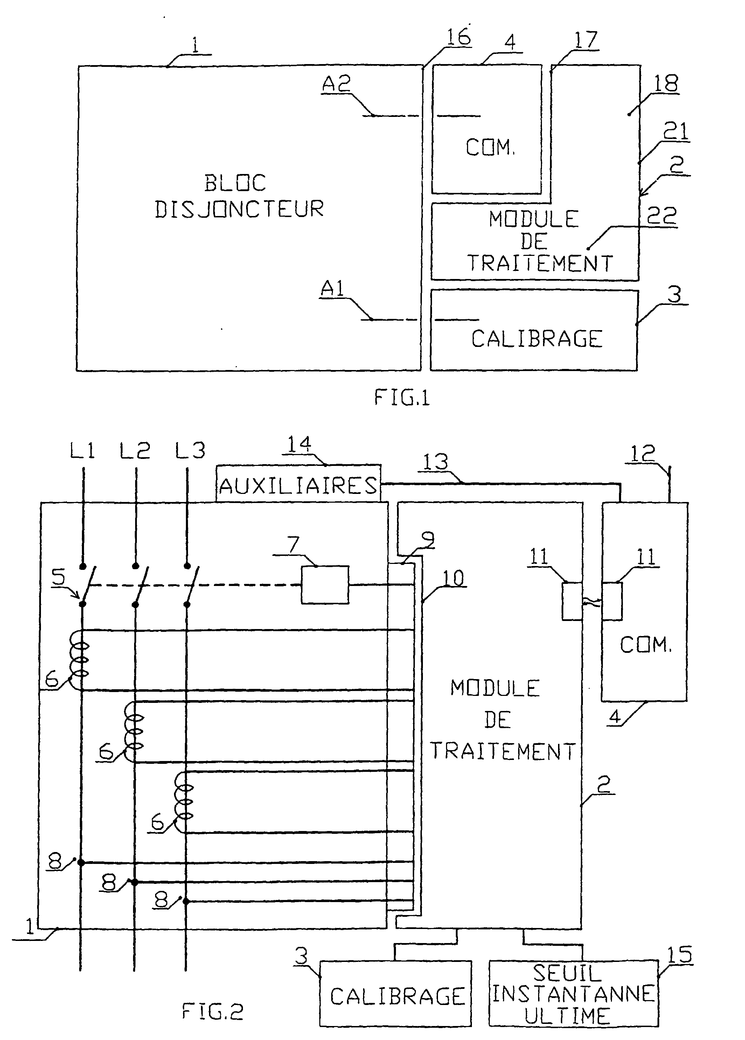

Comme représenté sur les figures 1 et 2, le disjoncteur selon l'invention comporte un bloc disjoncteur 1, un module de traitement 2, un module de calibrage 3 et un module de communication 4.

Sur la figure 2, seules les parties du bloc disjoncteur indispensables à la compréhension de l'invention ont été représentées. De manière connue, les conducteurs L1, L2, L3 à protéger traversent le bloc disjoncteur et peuvent être interrompus par des contacts de coupure 5. Des capteurs de courant 6 sont disposés sur chaque conducteur. Une bobine de déclenchement 7 commande l'ouverture des contacts 5. Le module de traitement 2 est connecté électriquement au bloc disjoncteur 1 qui lui fournit, à la sortie des capteurs de courant 6, des signaux représentatifs des courants parcourant les conducteurs L1, L2 et L3. Le bloc disjoncteur peut également comporter des capteurs de tension 8 de manière à fournir au module 2 les valeurs des tensions entre les conducteurs L1, L2 et L3. La bobine de déclenchement 7 provoque l'ouverture des contacts 5 lorsqu'elle reçoit des signaux de déclenchement du module de traitement 2. Des connecteurs électriques complémentaires, schématisés en 9 et 10 sur la figure 2 et disposés respectivement sur le bloc disjoncteur et sur le module de traitement, assurent ces connexions électriques lorsque le module de traitement est connecté mécaniquement au bloc disjoncteur.

Le module de calibrage 3 est connecté mécaniquement au bloc disjoncteur par tout moyen de fixation approprié schématisé sur la figure 1 par un axe de fixation A1. Le module de calibrage ne comporte pas de connexion électrique avec le bloc disjoncteur 1. Par contre, il est connecté électriquement (figure 2) au module de traitement 2, de manière à fournir à celui-ci des informations représentatives du calibre du disjoncteur.

Le module de communication 4 est fixé mécaniquement au bloc disjoncteur 1 par tout moyen de fixation approprié, schématisé sur la figure 1 par un axe de fixation A2. Il est physiquement totalement indépendant des autres modules et n'est relié au module de traitement 2 que par un couplage optique. Celui-ci est bidirectionnel et comporte des éléments optiques émetteurs/récepteurs 11 complémentaires dans chacun des modules 2 et 4. Le module de communication 4 est connecté à un bus de communication externe 12, bidirectionnel. Il peut également être connecté électriquement, par une liaison électrique 13, à des auxiliaires 14 de commande du disjoncteur. De manière classique, de tels auxiliaires, constitués par exemple par des bobines d'ouverture et/ou de fermeture du disjoncteur, sont disposés sur le bloc disjoncteur 1. Cette connexion électrique directe entre le module de communication et les auxiliaires permet d'assurer la commande du disjoncteur, par l'intermédiaire du bus 12, du module de communication 4, de la liaison électrique 13 et des auxiliaires 14, même en l'absence du module de traitement 2.

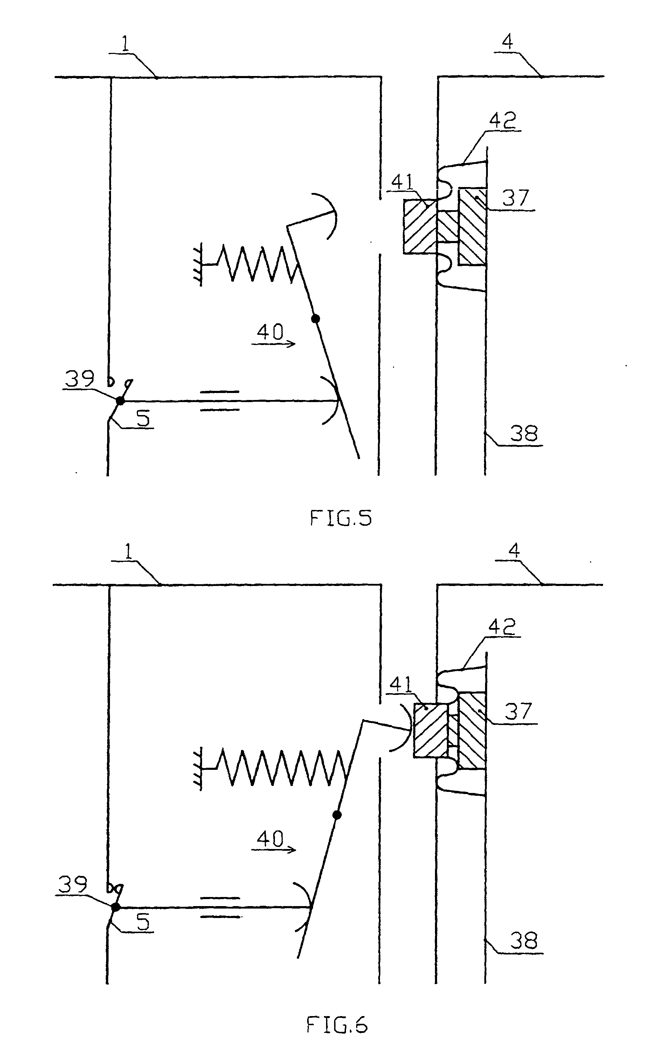

Par ailleurs, le module de communication 4 est connecté par des moyens de liaison mécanique, qui seront décrits plus en détail en regard des figures 5 et 6, à des organes du bloc disjoncteur 1 qui sont représentatifs de l'état du disjoncteur. Le bloc de communication 4 peut ainsi réaliser des fonctions de signalisation de l'état du disjoncteur, de façon autonome, même en l'absence du module de traitement.

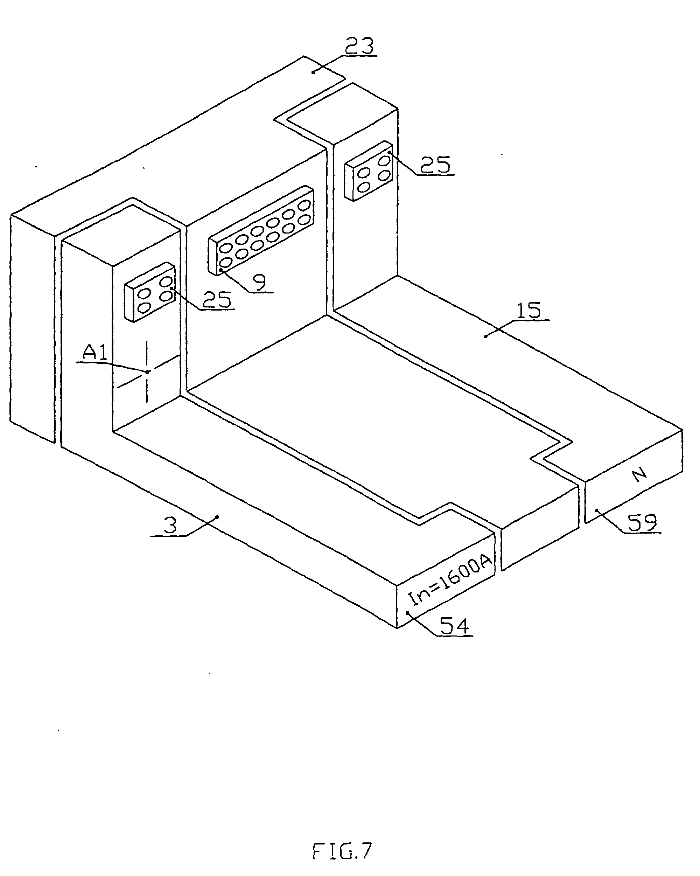

Un module additionnel 15, physiquement solidaire du bloc disjoncteur 1 est représenté à la figure 2. Sa nature et sa fonction seront décrites plus en détail au regard des figures 7 à 9.

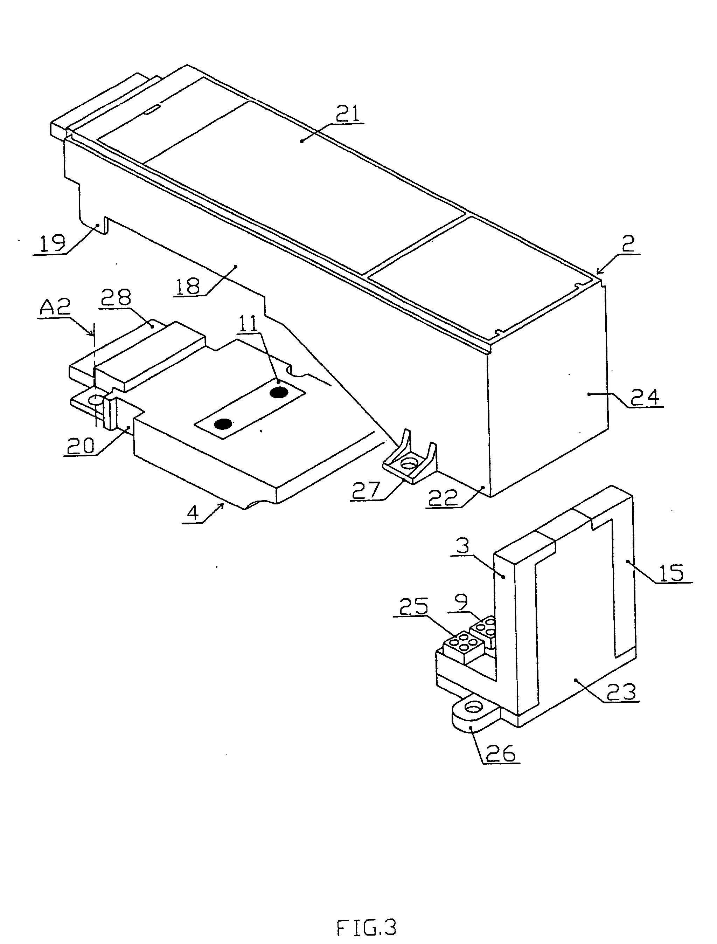

Le positionnement relatif des différents modules est illustré de manière schématique sur la figure 1, et de façon éclatée, dans le mode de réalisation particulier de la figure 3. Le module de communication 4 est disposé entre une face 16 du bloc disjoncteur et la face arrière 17 d'une partie 18 de moindre épaisseur du module de traitement 2. Le positionnement de la liaison optique entre les émetteurs-récepteurs 11 complémentaires des modules de communication 4 et de traitement 2 est assuré par des moyens de guidage complémentaires 19 et 20 prévus respectivement sur les modules de traitement et de communication.

La face avant 21 du module de traitement 2 constitue la face visible du déclencheur lorsqu'il est monté sur le bloc disjoncteur. Le module de traitement repose par sa partie inférieure 22, plus large, sur une embase. Dans un mode de réalisation préférentiel (figures 3 et 7), celle-ci est constituée par une interface 23 à laquelle sont fixés le module de calibrage 3 et le module additionnel 15. L'embase, en forme générale d'équerre, comporte une première partie sensiblement plane, sur laquelle repose la face inférieure 24 du module de traitement, et une seconde partie, perpendiculaire à la première, destinée à être fixée (pattes de fixation 26) à la face 16 du bloc disjoncteur. La seconde partie de l'embase comporte des connecteurs 25 et 9 destinés à coopérer avec des connecteurs correspondants du module de traitement 2, de manière à réaliser les connexions électriques nécessaires entre le module de traitement 2 et le module de calibrage 3, le module additionnel 15 ou le bloc disjoncteur 1 par l'intermédiaire de l'interface 23.

Les connecteurs électriques (9, 25) reliant le module de traitement 2 à l'embase et les moyens de guidage 19, 20, constituent également des moyens de fixation mécanique du module de traitement 2 sur le bloc disjoncteur lorsque l'interface 23 et le module de communication 4 sont fixés à celui-ci. Pour assurer une bonne stabilité mécanique des moyens additionnels de fixation peuvent être prévus. Sur la figure 3 de tels moyens sont schématisés par une patte de fixation 27.

Dans le mode de réalisation particulier de la figure 3, la connexion électrique du module de communication au bus 12 et aux auxiliaires 14 par le conducteur 13 est réalisée au moyen d'un connecteur 28 situé à la partie supérieure du module 4.

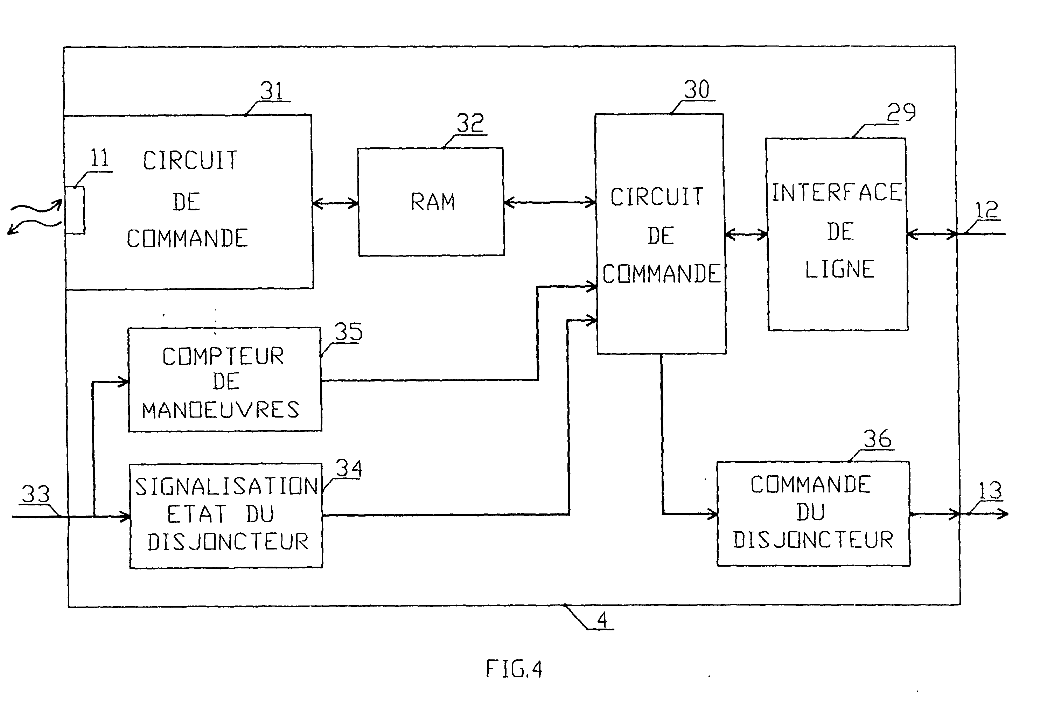

Le module de communication 4 de la figure 4 est adapté à un bus 12 de type prédéterminé. Il comporte une interface de ligne 29, connectée au bus 12 et un circuit de commande 30, connecté par une liaison bidirectionnelle à l'interface de ligne 29, tous deux adaptés à un bus de type prédéterminé. Les autres composants du module de communication sont standards et seuls le circuit 30 et l'interface 29 doivent être adaptés au type de bus choisi. A titre d'exemples non limitatifs le bus peut être du type BatiBUS, FIP, JBUS, etc...

Par ailleurs, le module 4 comporte un circuit de commande 31 connecté, par la liaison optique bidirectionnelle, au module de traitement et constituant une interface de communication avec l'unité de traitement. L'émetteur-récepteur optique 11 du module 4 appartient au circuit de commande 31. Les circuits de commande 30 et 31 sont tous deux connectés, par des liaisons bidirectionnelles, à une mémoire vive 32 (RAM), qui est ainsi partagée entre le module de communication et le module de traitement. On obtient ainsi, par l'intermédiaire du module de communication 4 et de la liaison optique, une communication entre le bus 12 et le module de traitement 2. Il est ainsi possible de lire et d'écrire des données dans le module de traitement et de réaliser des fonctions de télémesure (du module de traitement vers le bus), de téléréglage (du bus vers le module de traitement), d'indication des causes d'un déclenchement (du module de traitement vers le bus), etc...

Le module de communication 4 est également connecté à des organes du bloc disjoncteur 1 qui sont représentatifs de l'état du disjoncteur. Cette liaison, de type mécanique (voir figures 5 et 6) est représentée en 33 à la figure 4. Elle permet d'actionner un circuit 34 de signalisation de l'état du disjoncteur et un compteur de manoeuvres 35. Ces deux circuits, 34 et 35, sont connectés au circuit de commande 30, permettant ainsi le transfert de ces indications sur le bus 12.

Le module de communication 4 comporte, de plus, un circuit 36 de commande du disjoncteur, comportant une entrée, connectée à une sortie du circuit de commande 30, et une sortie connectée par le conducteur 13 aux auxiliaires 14 et permettant la commande à distance du disjoncteur.

Le module de communication 4 peut ainsi remplir trois fonctions indépendantes, à savoir des fonctions de signalisation (33, 34, 35, 30, 29, 12), de commande du disjoncteur (12, 29, 30, 36, 13) et de télémesure et téléréglage (11, 31, 32, 30, 29, 12). Cette structure du module de communication assure l'indépendance des différentes fonctions. Ainsi, les fonctions de signalisation et de commande du disjoncteur sont assurées par le module de communication même en l'absence de l'unité de traitement. Le module de communication est standard pour l'essentiel de ses constituants, mais adapté, par les circuits 29 et 30, au type de bus 12 auquel le client désire connecter le disjoncteur. La transformation, dans le module de communication 4, par les circuits 29 et 30, du protocole adapté au bus 12 en un protocole standardisé et réciproquement permet l'adaptation du disjoncteur aux différents types de bus, sans multiplier la variété des modules de traitement. Cette adaptation peut être réalisée par le client final qui peut fixer lui-même le module de communication sur le bloc disjoncteur.

Un mode de réalisation particulier de la liaison mécanique 33 est représenté aux figures 5 et 6. La liaison mécanique s'effectue par l'intermédiaire de microcontacts 37, dont un seul est représenté, en coupe, sur les figures sous la forme d'un bouton-poussoir monté sur une carte 38 de circuit imprimé. Dans le module de communication 4 représenté, la position non appuyée du microcontact 37 (fig. 5) est représentative de l'état ouvert des contacts de coupure du disjoncteur, tandis que sa position appuyée (fig 6) est représentative de leur état fermé. L'arbre des pôles 39 du disjoncteur, lié aux contacts de coupure 5, actionne, par l'intermédiaire de biellettes 40, avec ressort de rappel, les microcontacts 37. Une membrane souple 41 encapuchonne le microcontact 37. La membrane souple comporte une partie 42 formant en permanence un joint étanche, à l'intérieur du boîtier du module 4, autour de l'ouverture formée dans le boîtier du module 4 pour le passage de la membrane 41. La membrane souple transmet le mouvement des biellettes 40 au microcontact 37 tout en maintenant l'étanchéité à l'intérieur du module de communication, de manière à éviter l'entrée dans le module 4 de gaz de coupure, polluants, en provenance du bloc disjoncteur 1.

L'effort engendré par le système de biellettes sur les microcontacts peut être dosé. D'autres microcontacts, commandés de manière analogue à partir du bloc disjoncteur par un système de biellettes avec ressorts de rappel, permettent de signaler différents états mécaniques du disjoncteur. Il est ainsi possible non seulement de signaler les états ouvert/fermé du disjoncteur, mais également les états armé/désarmé du disjoncteur, le fait que l'ouverture a été provoquée par un défaut détecté par le module de traitement, ou l'état d'un organe de verrouillage. Tous ces états mécaniques du disjoncteur sont ainsi transmis, indépendamment, au module de communication 4, où ils sont transformés en signaux électriques et peuvent être signalés soit localement, soit à distance par le bus 12.

L'utilisation d'une liaison mécanique 33 entre le bloc disjoncteur et le module de communication pour effectuer les fonctions de signalisation permet en outre, de limiter la filerie indépendante du module de traitement.

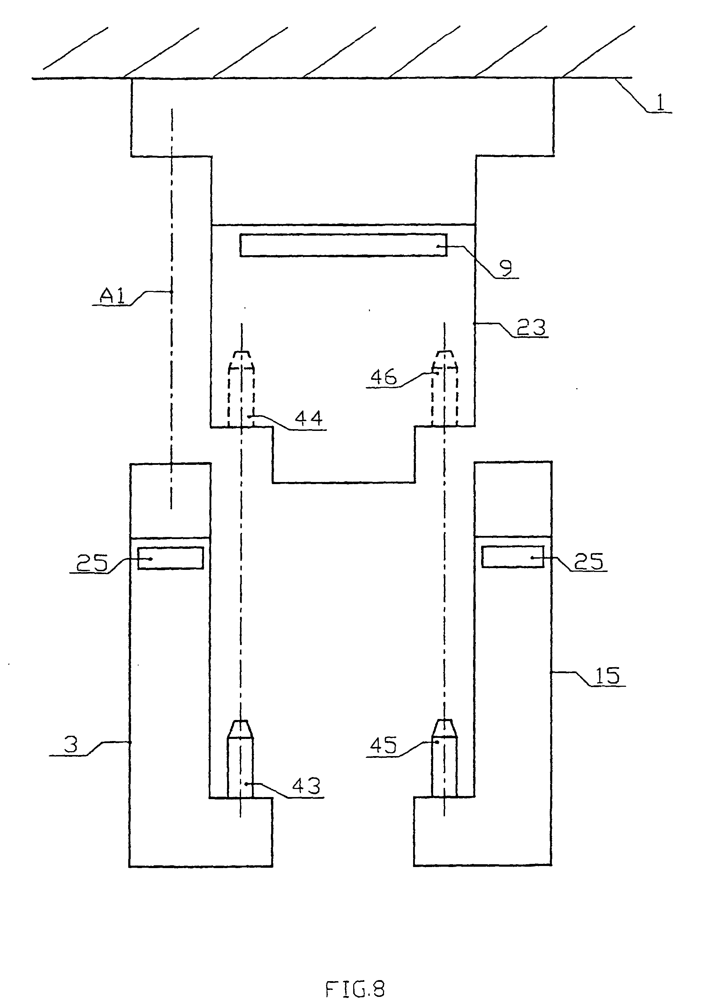

Un mode de réalisation préférentiel de l'embase, comportant l'interface 23, le module de calibrage 3 et le module additionnel 15, est représenté aux figures 7 et 8. Le module de calibrage 3 est monté de manière amovible sur l'embase. Pour faciliter le montage, le module 3 et l'interface 23 comportent des organes de guidage complémentaires.Ils comportent aussi, de préférence, des moyens de détrompage. Sur la figure 8, les organes de guidage sont constitués par une broche de guidage 43, solidaire du module de calibrage, et un orifice de guidage complémentaire 44 de l'interface 23. La fixation du module de calibrage peut se faire par tout moyen permettant un montage et un démontage aisés et accessibles par le client après démontage du module de traitement. De tels moyens de fixation peuvent être constitués par des vis et sont schématisés sur les figures 7 et 8 par l'axe de fixation A1. Le module additionnel 15 comporte également des organes de guidage complémentaires d'organes de guidage correspondants de l'interface et constitués sur la figure 8 par une broche de guidage 45 complémentaire d'un orifice de guidage 46 de l'interface. Le montage du module additionnel 15 sur l'interface 23 est réalisé en usine. Le module additionnel ne doit pas être démontable par le client et les moyens de fixation doivent être choisis en conséquence. A titre d'exemple, le module additionnel est fixé à l'interface, et en conséquence au bloc disjoncteur, par clipsage. Une telle fixation permet éventuellement un démontage en usine si nécessaire.

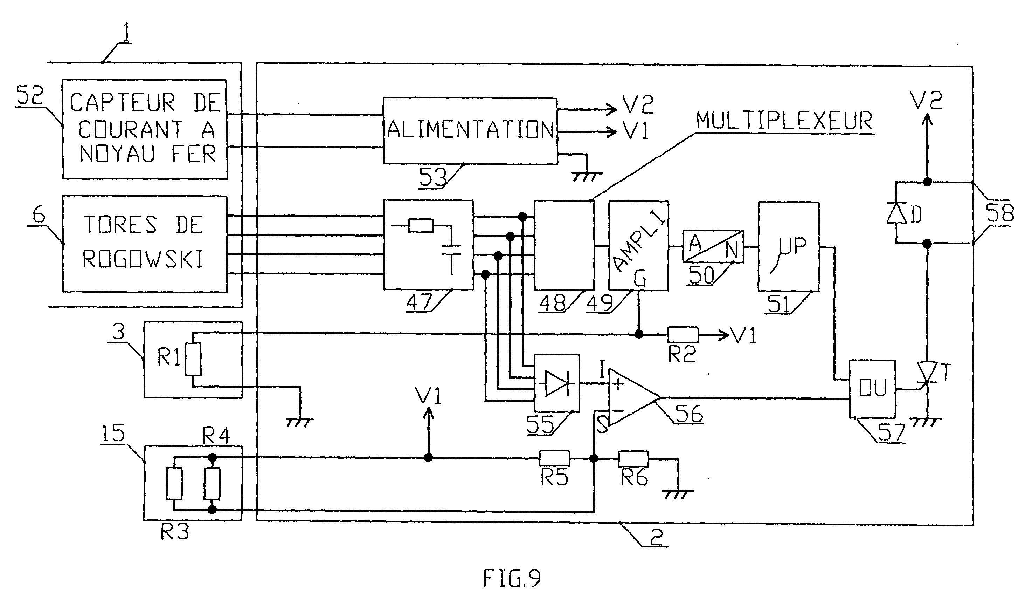

Les fonctions du module de calibrage et du module additionnel vont être explicitées plus en détail au regard de la figure 9 qui représente leurs interactions avec le module de traitement 1. Seuls les éléments du module de traitement 2 nécessaires à la compréhension de ces interactions sont représentés sur la figure 9. Dans ce mode de réalisation, les capteurs de courant 6 représentés à la figure 2 sont constitués par des tores de Rogowski fournissant des signaux représentatifs de la dérivée des courants par rapport au temps. Ces signaux sont intégrés dans le module 2 par un circuit d'intégration 47, qui peut être de type RC, dont les signaux de sortie sont représentatifs des courants dans les conducteurs à protéger. La sortie du circuit d'intégration est connectée en série à un multiplexeur 48, un amplificateur 49, un convertisseur analogique/numérique 50 et un circuit de traitement à microprocesseur 51. Lorsque les capteurs de courant 6 sont des tores de Rogowski , la puissance fournie est généralement insuffisante pour alimenter le module de traitement. On ajoute alors des capteurs de courant 52 à noyau fer, dans le bloc disjoncteur, connectés à un circuit d'alimentation 53 du module de traitement 2 qui fournit notamment des tensions V1 et V2 d'alimentation par rapport à la masse. La tension V1 est destinée à l'alimentation des circuits électroniques du module 2, tandis que la tension V2, plus élevée, est destinée à l'alimentation de la bobine de déclenchement en cas de déclenchement.

Lorsque les capteurs de courant sont constitués par des tores de Rogoswki, ceux-ci sont identiques quel que soit le calibre du disjoncteur. Dans les disjoncteurs connus utilisant ce type de capteur de courant, le calibre est fixé par le déclencheur. Il est alors nécessaire de prévoir des déclencheurs différents pour les différents calibres du disjoncteur. Le module de calibrage 3 permet d'éviter la différenciation du module de traitement 1 en fonction du calibre du disjoncteur. Le module de calibrage 3 permet de modifier le gain de l'amplificateur 49 en fonction du calibre choisi par le client. Le module de traitement prend alors automatiquement en compte le calibre choisi lors de la réalisation des fonctions de protection et /ou de mesure. Dans le mode de réalisation représenté sur la figure 9, le module de calibrage 3 comporte une résistance R1 qui est connectée entre la masse et une entrée G de contrôle de gain de l'amplificateur 49. L'entrée G est connectée à la tension V1 par l'intermédiaire d'une résistance R2. Les résistances R1 et R2 forment ainsi un pont diviseur et la valeur de la résistance R1 du module de calibrage fixe la valeur du gain de l'amplificateur G, représentatif du calibre du disjoncteur. Comme représenté à la figure 7, le module de calibrage 3 comporte une face avant 54 avec des indications représentatives du calibre (In) du disjoncteur. Ces indications restent visibles en face avant lorsque le module de traitement est monté sur l'interface 23. Un changement de calibre est possible par le client. Il suffit pour cela de démonter le module de traitement 2 et de remplacer l'ancien module de calibrage par un nouveau ayant le calibre désiré. Ce nouveau calibre, visible en face avant, sera automatiquement pris en compte par le module de traitement lorsque celui-ci aura été remis en place.

Le module additionnel 15 est destiné à fournir au module de traitement le niveau du seuil instantané analogique maximal, ou niveau de protection instantanée ultime, du disjoncteur. Ce niveau est indépendant du type de module de traitement et du calibre du disjoncteur. Il est fonction du type de disjoncteur uniquement de manière à s'adapter à la tenue électrodynamique du disjoncteur. Ce niveau lié au disjoncteur, est, par exemple, fixé par des résistances R3, R4 disposées dans le module additionnel.

La figure 9 permet de mieux comprendre le rôle du module additionnel 15. Dans le module de traitement 2, les sorties du circuit d'intégration 47 sont connectées à un circuit de redressement 55. Un circuit analogique, assurant la fonction de déclenchement instantané comporte essentiellement un circuit de comparaison 56. Celui-ci compare une valeur de seuil S et un signal I, fourni par le circuit de redressement 55 et représentatif du courant maximum parcourant les conducteurs à protéger.

Si le microprocesseur 51 détecte un défaut dans les conducteurs à protéger, il fournit un signal de déclenchement. En cas de défaut instantané, le défaut est détecté par le circuit de comparaison 56 du circuit analogique qui produit un signal de déclenchement. Les signaux de déclenchement, qu'ils proviennent du microprocesseur 51 ou du circuit 56, sont appliqués, par l'intermédiaire d'un circuit OU 57, à l'électrode de commande d'un commutateur électronique. Sur la figure 9, celui-ci est constitué par un thyristor T dont la gâchette est connectée à la sortie du circuit OU 57. Sa source est connectée à la masse et son drain est connecté, en série avec une diode D polarisée ou inverse, à la tension V2. Le drain du thyristor T et la tension V2 sont connectés à des bornes de sortie 58 du module de traitement connecté au bloc disjoncteur de manière à commander la bobine de déclenchement 7.

Le seuil S est obtenu par un diviseur de tension, constitué sur la figure 9, par deux résistances R5 et R6 disposées en série entre la tension V1 et la masse. Les résistance R3 et R4 du module additionnel 15 sont connectées en parallèle sur la résistance R5, définissant ainsi le seuil S. Ce seuil peut facilement être modifié. En éliminant l'une des résistances R3 ou R4, le seuil S diminue. Avec deux résistances dans un module additionnel, il est facile d'obtenir quatre valeurs différentes du seuil.

Bien entendu, le module de calibrage et le module additionnel ne sont pas limités aux modes de réalisation particuliers de la figure 9. Il est en particulier possible de prévoir un plus grand nombre de résistances, de manière à augmenter le nombre de seuils intermédiaires ou de valeurs de gain possibles. Il est également possible de mettre deux ou plusieurs résistances en série et non en parallèle dans un module et de court-circuiter les résistances désirées.

Comme représenté à la figure 7, le module additionnel 15 comporte une face avant 59 avec des indications représentatives du pouvoir de coupure du disjoncteur. Ce pouvoir de coupure, représentatif du seuil instantané ultime, est généralement exprimé par un code. A titre d'exemple, sur la figure 7, le pouvoir de coupure normal est représenté par la lettre N. Un pouvoir de coupure renforcé peut être représenté par la lettre H et un pouvoir de coupure très haut par la lettre L.

Sur les figures 7 et 8, le module de calibrage 3 et le module additionnel 15 sont disposés symétriquement par rapport à l'interface 23.

L'utilisation d'un interface 23, liée au bloc disjoncteur, et portant le module additionnel 15 et le module de calibrage 3 permet l'interchangeabilité des modules de traitement.

L'utilisation des modules permet une différenciation tardive des variantes d'un même disjoncteur, et une adaptation simple aux besoins des clients.

La liaison décrite ci-dessus entre le module de communication 4 et le module de traitement 2 est une liaison optique. Cependant, l'invention n'est pas limitée à ce type de liaison et s'étend à tout type de liaison à isolement galvanique, notamment à une liaison de type inductif.

## Revendications

1. Disjoncteur comportant un bloc disjoncteur 1, un module amovible de traitement (2), comportant une unité de traitement électronique et connecté mécaniquement et électriquement au bloc disjoncteur, un module amovible de calibrage (3), comportant des moyens de calibrage, fixé mécaniquement (A1) au bloc disjoncteur et connecté électriquement à l'unité de traitement (2), et des moyens de communication connectés à un bus de communication externe (12), disjoncteur **caractérisé en ce qu'**il comporte au moins un module amovible de communication (4), distinct des modules de traitement (2) et de calibrage (3), comportant lesdits moyens de communication, fixé mécaniquement (A2) au bloc disjoncteur (1) et connecté à l'unité de traitement (2) par des moyens de liaison à isolement galvanique (11), à des organes du bloc disjoncteur représentatifs de l'état du disjoncteur par des moyens de liaison mécanique (33) et au bus de communication externe (12) par des moyens (28) de liaison électrique d'entrée/sortie.

2. Disjoncteur selon la revendication 1, **caractérisé en ce que** les moyens de liaison à isolement galvanique sont des moyens de liaison optique (11).

3. Disjoncteur selon la revendication 2, **caractérisé en ce que** le module de communication (4) comporte des moyens de signalisation (34, 35) connectés par les moyens de liaison mécanique (33) au bloc disjoncteur, et des moyens de télémesure et/ou de téléréglage (29 à 32) connectés par les moyens de liaison optique (11) à l'unité de traitement (2), les moyens de signalisation, de télémesure et/ou de téléréglage étant connectés au bus de communication externe (12) par les moyens (28) de liaison électrique d'entrée/ sortie.

4. Disjoncteur selon l'une quelconque des revendications 1 à 3, **caractérisé en ce que** le module de communication (4) comporte des moyens de commande (36) connectés électriquement (13) à des auxiliaires (14) de commande du disjoncteur, les moyens de commande (36) étant connectés au bus de communication externe (12) par les moyens (28) de liaison électrique d'entrée / sortie.

5. Disjoncteur selon l'une quelconque des revendications 1 à 4 **caractérisé en ce que** les moyens (28) de liaison électrique d'entrée / sortie comportent dans le module de communication des moyens (29, 30) adaptés à un bus de communication (12) de type prédéterminé.

6. Disjoncteur selon l'une quelconque des revendications 1 à 5, **caractérisé en ce que** les moyens (33) de liaison mécanique du module de communication aux organes du bloc disjoncteur représentatifs de l'état du disjoncteur comportent des microcontacts (37), disposés dans le module de communication et ayant des organes de commande (41, 42) en saillie sur une face du module de communication (4) opposée au bloc disjoncteur (1), et dans le bloc disjoncteur des moyens (40) mécaniques d'actionnement desdits organes de commande, le module de communication (4) comportant des moyens de transformation des signaux mécaniques des microcontacts en signaux électriques et des moyens de signalisation (34, 35) de l'état du disjoncteur.

7. Disjoncteur selon la revendication 6, **caractérisé en ce que** les organes (41, 42) de commande des microcontacts (37) comportent chacun une membrane, étanche, souple, recouvrant le micro contact correspondant.

8. Disjoncteur selon l'une quelconque des revendications précédentes, **caractérisé en ce que**, le bloc disjoncteur (1) comportant des moyens de mesure de courant (6) constitués par des tores de Rogowski dont la sortie est connectée au module de traitement (2), le module de calibrage (3), monté de manière amovible sur le bloc disjoncteur (1), comporte une face avant (54) avec des indications représentatives du calibre (In) du disjoncteur.

9. Disjoncteur selon la revendication 6, **caractérisé en ce que** le module de traitement (2) comporte un amplificateur à gain variable (43) connecté à la sortie des moyens (6) de mesure de courant et comportant une entrée (G) de commande de gain connectée électriquement aux moyens de calibrage (R1) du module de calibrage (3).

10. Disjoncteur selon l'une quelconque des revendications précédentes, **caractérisé en ce que**, le module de traitement (2) comportant des moyens de protection instantanée analogique ultime (55, 56, 57) connectés à des capteurs de courant (6) du bloc disjoncteur (1) et destinés à comparer à un seuil instantané analogique maximal (5) une valeur (I) représentative du courant fournie par les capteurs de courant (6), le disjoncteur comporte un module additionnel (15) comportant des moyens (R3, R4) de réglage dudit seuil (S) en fonction du type du disjoncteur, ledit module additionnel (15) étant fixé mécaniquement sur le bloc disjoncteur (1), de manière non amovible, connecté électriquement au module de traitement (2) et comportant une face (59) comportant des indications (N, H ou L) représentatives du pouvoir de coupure du disjoncteur.

11. Disjoncteur selon la revendication 10, **caractérisé en ce qu'**il comporte des moyens de montage du module de calibrage (3) et du module additionnel (15), lesdits moyens de montage comportant une interface (23) solidaire du bloc disjoncteur (1) et comportant des moyens de guidage (44, 46) et des moyens de fixation complémentaires de moyens de guidage (43, 45) et de moyens de fixation du module de calibrage (3) et du module additionnel (15).

12. Disjoncteur selon la revendication 11, **caractérisé en ce que** le module de calibrage (3) et le module additionnel (15) sont disposés symétriquement par rapport à l'interface (23).

## Patentansprüche

1. Leistungsschalter umfassend einen Leistungsschalterblock 1, ein mechanisch und elektrisch mit dem Leistungsschalterblock verbundenes abnehmbares Verarbeitungsmodul (2) mit einer elektronischen Verarbeitungseinheit (2), ein mechanisch am Leistungsschalterblock befestigtes (A1) und elektrisch mit der Verarbeitungseinheit (2) verbundenes abnehmbares Nennstrom-Anpaßmodul (3) mit Nennstrom-Anpaßmitteln und an einen externen Kommunikationsbus (12) angeschlossene Kommunikationsmittel, **dadurch gekennzeichnet, daß** der Leistungsschalter mindestens ein abnehmbares Kommunikationsmodul (4) umfaßt, das sich vom Verarbeitungsmodul (2) und vom Nennstrom-Anpaßmodul (3) unterscheidet, die genannten Kommunikationsmittel umfaßt, mechanisch am Leistungsschalterblock (1) befestigt ist (A2) und über Verbindungsmittel mit galvanischer Trennung (11) mit der Verarbeitungseinheit (2), über mechanische Verbindungsmittel (33) mit die Schaltstellung des Leistungsschalters abbildenden Teilen des Leistungsschalterblocks sowie über elektrische Ein-/Ausgangsverbindungen (28) mit dem externen Kommunikationsbus (12) verbunden ist.

2. Leistungsschalter nach Anspruch 1, **dadurch gekennzeichnet, daß** die Verbindungsmittel mit galvanischer Trennung als optische Verbindungsmittel (11) ausgebildet sind.

3. Leistungsschalter nach Anspruch 2, **dadurch gekennzeichnet, daß** das Kommunikationsmodul (4) über die mechanischen Verbindungsmittel (33) mit dem Leistungsschalterblock verbundene Anzeigemittel (34, 55) sowie über die optischen Verbindungsmittel (11) mit der Verarbeitungseinheit (2) verbundene Fernmeßmittel und/oder Fernregelmittel (29 bis 32) umfaßt, welche Anzeige-, Fernmeß- und/oder Fernregelmittel über die elektrischen Ein-/Ausgangsverbindungen (28) mit dem externen Kommunikationsbus (12) verbunden sind.

4. Leistungsschalter nach irgendeinem der Ansprüche 1 bis 3, **dadurch gekennzeichnet, daß** das Kommunikationsmodul (4) mit Hilfsschaltorganen (14) des Leistungsschalters elektrisch verbundene Steuermittel (26) umfaßt, welche Steuermittel (36) über die elektrischen Ein-/Ausgangsverbindungen mit dem externen Kommunikationsbus (12) verbunden sind.

5. Leistungsschalter nach irgendeinem der Ansprüche 1 bis 4, **dadurch gekennzeichnet, daß** die im Kommunikationsmodul ausgebildeten elektrischen Ein-/Ausgangsverbindungen (28) an einen Kommunikationsbus (12) eines bestimmten Typs angepaßte Mittel (29, 30) umfassen.

6. Leistungsschalter nach irgendeinem der Ansprüche 1 bis 5, **dadurch gekennzeichnet, daß** die mechanischen Verbindungsmittel (33) zur Verbindung des Kommunikationsmoduls mit den die Schaltstellung des Leistungsschalters abbildenden Teilen des Leistungsschalterblocks im Kommunikationsmodul angeordnete Mikrokontakte (37) mit Ansteuermitteln (41, 42) umfassen, die aus einer, dem Leistungsschalterblock (1) gegenüberliegenden Seite des Kommunikationsmoduls (4) herausstehen, sowie im Leistungsschalterblock angeordnete mechanische Betätigungsmittel (40) zur Betätigung der genannten Ansteuermittel umfassen, wobei das Kommunikationsmodul (4) Mittel zur Umwandlung der mechanischen Signale der Mikrokontakte in elektrische Signale sowie Mittel (34, 35) zur Anzeige der Schaltstellung des Leistungsschalters umfaßt.

7. Leistungsschalter nach Anspruch 6, **dadurch gekennzeichnet, daß** die Ansteuermittel (41, 42) der Mikrokontakte (37) jeweils eine gasdichte, biegsame Membran umfassen, die über den zugehörigen Mikrokontakt gestülpt ist.

8. Leistungsschalter nach irgendeinem der vorhergehenden Ansprüche, **dadurch gekennzeichnet, daß** der Leistungsschalterblock (1) als Wandler mit Rogowskispulen ausgebildete Strommeßmittel (6) umfaßt, deren Ausgang mit dem Verarbeitungsmodul (2) verbunden ist, und das abnehmbar auf dem Leistungsschalterblock (1) montierte Nennstrom-Anpaßmodul (3) eine Vorderseite mit Anzeigen umfaßt, die den Nennstrom (In) des Leistungsschalters abbilden.

9. Leistungsschalter nach Anspruch 6, **dadurch gekennzeichnet, daß** das Verarbeitungsmodul (2) einen Verstärker mit veränderbarem Verstärkungsfaktor (43) umfaßt, der mit dem Ausgang der Strommeßmittel (6) verbunden ist und einen mit den Nennstrom-Anpaßmitteln (R1) des Nennstrom-Anpaßmoduls (3) verbundenen Eingang (G) zur Steuerung des Verstärkungsfaktors umfaßt.

10. Leistungsschalter nach irgendeinem der vorhergehenden Ansprüche, **dadurch gekennzeichnet, daß** das Verarbeitungsmodul (2) Mittel zum unverzögerten Analog-Grenzwert-Schutz (55, 56, 57) umfaßt, die an Stromwandler (6) des Leistungsschalterblocks (1) angeschlossen sind und dazu dienen, einen Wert (I), der den von den Stromwandlem (6) gelieferten Strom abbildet, mit einem maximalen analogen unverzögerten Ansprechwert (S) zu vergleichen, wobei der Leistungsschalter ein Zusatzmodul (15) mit Einstellmitteln (R3, R4) zur Einstellung des genannten Ansprechwerts (S) in Abhängigkeit vom Leistungsschaltertyp umfaßt, welches Zusatzmodul (15) nichtabnehmbar mechanisch am Leistungsschalterblock (1) befestigt und elektrisch mit dem Verarbeitungsmodul (2) verbunden ist sowie eine Seite (59) mit Anzeigen (N, H oder L) umfaßt, die das Ausschaltvermögen des Leistungsschalters abbilden.

11. Leistungsschalter nach Anspruch 10, **dadurch gekennzeichnet, daß** er Montagemittel zum Anbau des Nennstrom-Anpaßmoduls (3) und des Zusatzmoduls (15) umfaßt, welche Montagemittel ein Verbindungselement (23) umfassen, das fest mit dem Leistungsschalterblock (1) verbunden ist und Führungsmittel (44, 46) sowie Befestigungsmittel umfaßt, die entsprechenden Führungsmitteln (43, 45) und Befestigungsmitteln des Nennstrom-Anpaßmoduls (3) bzw. des Zusatzmoduls (15) zugeordnet sind.

12. Leistungsschalter nach Anspruch 11, **dadurch gekennzeichnet, daß** das Nennstrom-Anpaßmodul (3) und das Zusatzmodul (15) in Bezug zum Verbindungselement (23) symmetrisch angeordnet sind.

## Claims

1. Circuit breaker comprising a circuit breaker unit (1), a removable processing module (2) comprising an electronic processing unit and mechanically and electrically connected to the circuit breaker unit, a removable calibration module (3), comprising calibrating means, mechanically fixed (A1) to the circuit breaker unit and electrically connected to the processing unit (2), and communication means connected to an external communication bus (12), circuit breaker **characterized in that** it comprises at least one removable communication module (4), distinct from the processing module (2) and calibration module (3), comprising said communication means, mechanically fixed (A2) to the circuit breaker unit (1) and connected to the processing unit (2) by connection means with galvanic isolation (11), to means of the circuit breaker unit representative of the state of the circuit breaker by mechanical connection means (33) and to the external communication bus (12) by electrical input/ output connection means (28).

2. Circuit breaker according to claim 1, **characterized in that** the connection means with galvanic isolation are optical connection means (11).

3. Circuit breaker according to claim 2, **characterized in that** the communication module (4) comprises indication means (34, 35) connected by the mechanical connection means (33) to the circuit breaker unit, and remote measurement and / or remote setting means (29 to 32) connected by the optical connection means (11) to the processing unit (2), the indication, remote measurement and / or remote setting means being connected to the external communication bus (12) by the electrical input/ output connection means (28).

4. Circuit breaker according to any one of the claims 1 to 3, **characterized in that** the communication module (4) comprises control means (36) electrically connected (13) to control auxiliaries (14) of the circuit breaker, the control means (36) being connected to the external communication bus (12) by the electrical input/ output connection means (28).

5. Circuit breaker according to any one of the claims 1 to 4, **characterized in that** the electrical input/ output connection means (28) comprise in the communication module means (29, 30) suited to a communication bus (12) of predetermined type.

6. Circuit breaker according to any one of the claims 1 to 5, **characterized in that** the means (33) for mechanical connection of the communication module to the means of the circuit breaker unit representative of the state of the circuit breaker comprise microcontacts (37) arranged in the communication module and having control means (41, 42) salient from a panel of the communication module (4) opposite the circuit breaker unit (1), and in the circuit breaker unit mechanical means (40) for actuating said control means, the communication module (4) comprising means for transforming the mechanical signals from the microcontacts into electrical signals and means (34, 35) for indicating the state of the circuit breaker.

7. Circuit breaker according to claim 6, **characterized in that** the control means (41, 42) of the microcontacts (37) each comprise a flexible, tight membrane covering the corresponding microcontact.

8. Circuit breaker according to any one of the foregoing claims, **characterized in that**, the circuit breaker unit (1) comprising current measurement means (6) formed by Rogowski coils the output whereof is connected to the processing module (2), the calibration module (3) fitted in removable manner on the circuit breaker unit (1) comprises a front panel (54) with indications representative of the circuit breaker rating (In).

9. Circuit breaker according to claim 6, **characterized in that** the processing module (2) comprises a variable gain amplifier (43) connected to the output of the current measuring means (6) and comprising a gain control input (G) electrically connected to the calibration means (R1) of the calibration module (3).

10. Circuit breaker according to any one of the foregoing claims, **characterized in that**, the processing module (2) comprising analogue final instantaneous protection means (55, 56, 57) connected to current sensors (6) of the circuit breaker unit (1) and designed to compare a value (I) representative of the current supplied by the current sensors (6) with an analogue maximum instantaneous threshold (5), the circuit breaker comprises an additional module (15) comprising means (R3, R4) for adjusting said threshold (S) according to the type of circuit breaker, said additional module (15) being mechanically fixed in unremovable manner on the circuit breaker unit (1), electrically connected to the processing unit (2) and comprising a panel (59) bearing indications (N, H or L) representative of the breaking capacity of the circuit breaker.

11. Circuit breaker according to claim 10, **characterized in that** comprises fitting means for fitting the calibration module (3) and the additional module (15), said fitting means comprising an interface (23) securedly affixed to the circuit breaker unit (1) and comprising guiding means (44, 46) and fixing means complementary to guiding means (43, 45) and fixing means of the calibration module (3) and additional module (15).

12. Circuit breaker according to claim 11, **characterized in that** the calibration module (3) and additional module (15) are arranged symmetrically with respect to the interface (23).
